(19) Europäisches Patentamt
European Patent Office
Office européen des brevets

(11) Publication number: 0 091 938
B1

# (12) EUROPEAN PATENT SPECIFICATION

(45) Date of publication of patent specification: 15.01.86

(51) Int. Cl.[4]: C 01 B 17/76

(21) Application number: 82903267.1

(22) Date of filing: 22.10.82

(86) International application number:
PCT/SE82/00344

(87) International publication number:
WO 83/01438 28.04.83 Gazette 83/10

## (54) A METHOD IN THE MANUFACTURE OF SULPHURIC ACID FROM GASES GENERATED IN DISCONTINUOUS PROCESSES.

(30) Priority: 26.10.81 SE 8106308

(43) Date of publication of application:
26.10.83 Bulletin 83/43

(45) Publication of the grant of the patent:
15.01.86 Bulletin 86/03

(84) Designated Contracting States:
AT BE CH DE FR GB LI LU NL SE

(56) References cited:
NO-B- 131 417
SE-B- 422 317
US-A-3 475 120

(73) Proprietor: Boliden Aktiebolag
Box 5508
S-114 85 Stockholm (SE)

(72) Inventor: PETERSSON, Stig Arvid
Vintergatan 25
S-932 00 Skelleftehamn (SE)

(74) Representative: Lundin, Björn-Eric et al
Boliden Aktiebolag Box 5508
S-114 85 Stockholm (SE)

EP 0 091 938 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a method for utilizing in the manufacture of sulphuric acid in a contact plant, process gases which contain sulphur dioxide and which originate from discontinuous processes.

By discontinuous processes is meant here and in the following those processes within nonferrous metallurgy in which sulphur dioxide is released intermittently through one or more of the reactions taking place during the process. This intermittent release may be caused by the fact that sulphur dioxide generating reactions only take place over certain periods of the total process cycle, or as a result of the process cycle being interrupted, as is normally the case with batch-wise processes. The invention relates in particular to processes in which sulphidic raw materials are smelted, or matte is converted, in batch-wise processes, for example such processes as the autogenous smelting of copper concentrates or lead concentrates in Kaldo converters, or matte conversion in Pierce-Smith converters.

Smelting plants the world over for producing metal from sulphidic raw materials are practically always provided with sulphuric acid plants. The provision of such sulphuric acid plants is mainly necessitated to satisfy environment control regulations, since contamination of the air and the ground with sulphur cannot be accepted. The manufacture of sulphuric acid, however, can also often be justified economically.

Sulphuric acid is generally produced in contact plants which require constant operational conditions with respect to the amount of gas supplied thereto, the sulphur dioxide content of the gas, moisture content and temperature. Such sulphuric acid producing processes are described in, for example US—A 3475120 and NO—B 131417, the former relating to utilizing a process gas containing sulphur dioxide and water vapor, the latter involving a multi-stage contact process using supply of a sulphur dioxide rich gas formed by concentration of roaster gases. Thus, strenuous efforts have been made to develop continuous metallurgical processes which, in addition generate limited quantities of waste gas containing high quantities of sulphur dioxide. In other words, the requirements placed on the gas conditions in the sulphuric acid manufacturing plants are indicative of the manner in which the metallurgical processes should be developed. Obviously, this restricts the freedom available in the development of rational and simple metallurgical processes. Continuous metal smelting processes have been found to be encumbered with many disadvantages, due to the specific conditions which must prevail in the processes. For example, a much purer starting material is generally required partly because large quantities of slag are subjected to a higher oxygen potential than in the case of batch-wise processes, therewith increasing the risk of metal being lost to the slag, and partly because other, less valuable elements are readily absorbed in the metal phase before they can be driven-off from the molten bath. Other inherent problems in known continuous smelting processes are associated with the control of flows of material between the furnaces or parts thereof and the balance between the ingoing and outgoing continuous flow of material; this control is extremely important and requires the provision of extremely sophisticated control systems. In addition, many metallurgical operations are difficult to carry out continuously. One example of such operations is the conversion of matte in Pierce-Smith converters, which are generally used in pyrometallurgical copper smelters.

Highly important process-metallurgical advantages would be afforded if it were possible to also treat intermittently generated process gases in a simple fashion and without disadvantage in the manufacture of sulphuric acid.

In accordance with one known method of utilizing intermittently generated gases, a plurality of discontinuous processes are coordinated in such a manner that the resultant process gas exhibits substantially those quantities, percentages and such other properties, required for the manufacture of sulphuric acid. The control and coordination problems experienced in the operation of the smelter are extremely great, and momentary disturbances in the operation of a single smelter unit may seriously effect the manufacture of the sulphuric acid. In addition, the process times between the operational states of the different smelter units must be carefully coordinated, since otherwise production in large sections of the smelter can be negatively effected, both with respect to quantity and quality.

The worst problems can be resolved, however, by incorporating certain subsidiary processes capable of being effected intermittently when required. Thus, if there is a breakdown, for example, in one of the smelter units or if the gas does not contain sufficient sulphur dioxide, a sulphur combustion furnace can be connected to the system, thereby enabling the required, constant gas conditions to be maintained. It will be understood, however, that these solutions are only applied when absolutely necessary, because of the expense involved.

A more suitable solution in this respect is afforded by the method according to our earlier Swedish Patent Application SE—A 8004588-3 or the corresponding European Patent Application EP—A 81850111.6. This problem may be solved when utilizing this known method by first separating the sulphur dioxide from the gas to form pure sulphur dioxide, in a known manner, for example in accordance with our earlier U.S. Patent Specification US,A,3985529, and then oxidising sulphur dioxide in excess quantities with pure oxygen to form sulphur trioxide, which is converted to sulphuric acid in a manner known *per se* in a sort of mini-contact plant. In order to put this method into effect, however, it must be possible to produce pure sulphur dioxide. Consequently, this method is not as attractive in those cases when a conventional sulphuric acid contact plant is provided or required for recovering the process gases. It would appear that the manufacture of the sulphur dioxide instead of sulphuric acid is the only practical alternative with the use of process gases from discontinuous processes when those solutions described above are not possible and/or economically viable, i.e. coordination between a plurality of discontinuous processes, the use of auxiliary processes, or the manufacture of sulphuric acid from pure sulphur dioxide.

It has now surprisingly been found possible, however, to manufacture sulphuric acid in contact plants with the use of intermittently generated process gases in a manner which is both technically expedient and economically viable, without the occurrence of complicated problems relating to process control. The method can also be used to advantage when operating single, batch-wise units, for example single Kaldo furnaces or converters. The invention is characterized by withdrawing all of the process gas or a predetermined quantity thereof from being passed to the contact plant during process operational periods in which process gas containing sulphur dioxide is generated, separating sulphur dioxide at least partially from the withdrawn process gas to form a liquid phase containing said separated sulphur dioxide, releasing sulphur dioxide from the formed liquid phase with the aid of a carrier gas during those process operational periods in which no process gas is generated or passed to the contact plant or the process gas passed to the contact plant contains insufficiently high quantities or percentages of sulphur dioxide, supplying carrier gas containing the released sulphur dioxide to the contact plant and adjusting the quantity of the carrier gas and the sulphur dioxide content thereof so that, together with any quantities of non-withdrawn process gas and/or withdrawn sulphur dioxide depleted process gas from the separation operation supplied to the contact plant, a predetermined total quantity of gas having a predetermined sulphur dioxide percentage is substantially continuously supplied to the contact plant.

Thus, in accordance with the invention all of the process gas, or at least a substantial part of said gas, is withdrawn from being directly passed to the sulphuric acid contact plant during process operational periods in which process gas containing sulphur dioxide is generated, and supplied to an apparatus in which sulphur dioxide can be separated from the rest of the gas. Normally and preferably process gas is only withdrawn when the sulphur dioxide content thereof is in excess of the required when supplying the gas to the contact plant, although it is also possible and within the scope of the invention to withdraw process gas during other periods, when the process gas contains sulphur dioxide. The sulphur dioxide is separated from the gas in accordance with any known method, although absorption or condensation techniques are preferred.

If the sulphur dioxide is to be condensed, the gas containing the sulphur dioxide is suitably dried before the sulphur dioxide is condensed, for example by passing the gas through a drying tower containing sulphuric acid. Part of the sulphur dioxide content is then condensed in a conventional condensor, while the remainder of the sulphur dioxide is passed, together with the remainder of the gas, to the contact tower of the sulphuric acid plant. At those times when no gas is produced or gas containing no sulphur dioxide or insufficiently amounts thereof is produced in the metallurgical process, the liquid sulphur dioxide produced during the condensing process is vaporized with air and supplied to the contact tower in order to make up the deficiency. The amounts of supplied gas and percentages of sulphur dioxide required for the conversion of the sulphur dioxide to sulphur trioxide in the contact plant varies depending on the type and size of the contact plant and the catalyst used, but required conditions are prescribed by the supplier of the apparatus. Thus, the predetermined gas supply and sulphur dioxide content is always easy to stipulate.

When absorption is preferred, the gas taken from the process is contacted in an absorption tower with an absorbent suitable for sulphur dioxide, for example water, a pH-buffering salt, such as citrate solution, or methyl aniline. The sulphur-dioxide-containing liquid obtained from the absorption process is then stored in a tank at the lowest possible temperature. The gas from which the sulphur dioxide was removed can be cleansed in a normal manner and then supplied to a sulphuric acid plant, or, if the remaining amount of sulphur dioxide in the gas is sufficiently low, the gas can be passed to a chimney and discharged to the surroundings. When a period occurs in which no process gas is produced or process gas containing no sulphur dioxide or insufficiently amounts thereof is produced or passed to the contact plant, the sulphur-dioxide-containing liquid is passed to a stripping tower to which a carrier gas, for example air and/or water vapour, is introduced at the bottom thereof. The carrier gas strips off the sulphur dioxide, and the gaseous mixture containing sulphur dioxide is passed to the contact tower of the sulphuric acid plant. Subsequent to stripping the sulphur dioxide, the absorption liquid can be neutralized, for example with lime, and be returned to the absorption tower. Thus, gas can be continuously supplied to a sulphuric acid plant in constant quantities and sulphur dioxide percentages, even when the amount and the composition of gas generated by the process-metallurgical units varies greatly.

The method according to the invention can be applied in practically all discontinuous metallurgical processes, such as matte conversion and Kaldo smelting, for example those processes described in our earlier U.S. Patent Specifications US,A,3984235, 4008075, 4144055, 4204861 and 4244735, and also in continuous processes in which sulphur dioxide is produced intermittently, for example those smelting processes described in the Swedish Patent Publication SE,B,7906801-1.

The invention, however, will now be more closely described in conjunction with the smelting of a lead concentrate in a Kaldo converter, with reference to the drawing, the single Figure of which is a flow diagram of the process applied.

The Figure illustrates in flow schematic form a lead concentrate smelting process from which sulphur dioxide was produced for 10—12 hours per day, the remaining time being used for reduction, and tapping-off slag and metal etc. The reference 1 in the Figure generally identifes the smelting period of the Kaldo converter, i.e. the period over which gas containing sulphur dioxide is produced. The reference 2 identifies the remaining periods of the manufacturing cycle. A manufacturing cycle takes 240 minutes to complete, and each smelting period 1 has a duration of about 100 minutes. The sulphur-dioxide-containing process gas is passed through a line 3 to a wet gas-purifying plant having the form of a wet-electrostatic precipitator 4, in which dust is separated from the gas, whereafter the dust-free gas is passed through a line 5 to an absorption tower 6 for absorption of sulphur dioxide contained in the gas. The absorption process is carried out with water, citrate solution or other suitable absorption agent for sulphur dioxide and is preferably controlled so that the gas remaining after the absorption process contains sulphur dioxide in a quantity and percentage such as to enable it to be charged without detriment to a sulphuric acid plant. This gas, now poorer in sulphur dioxide, is passed through a line 7 to a sulphuric acid plant, generally identified at 8. It is also possible to control the absorption process so as to absorb substantially all of the sulphur dioxide content thereof. In those cases the resulting sulphur dioxide freed gas can be discharged via a not shown line to the atmosphere. It is also possible to pass part of the gas having an original sulphur dioxide content to the sulphuric acid plant through a line 9, subsequent to mixing the gas with gas containing residual amounts of sulphur dioxide from the absorption plant 6, although, since the resultant gas supplied to the plant 8 through the line 10 must have substantially the same sulphur dioxide percentage as that mentioned above, it is necessary, in these cases, to carry out the absorption process so that the gas has a lower residual sulphur dioxide content. This ensures a required constant supply of gas and sulphur dioxide to the sulphuric acid plant 8 during the smelting period 1.

Sulphur dioxide is absorbed in the tower 6 by supplying water thereto through a line 11. Subsequent to the absorption process, the absorption liquid is passed through a line 12 to a tank 13 for storing the liquid containing sulphur dioxide at low temperatures.

When the smelting period 1 approached its conclusion and the period 2 is to commence, and thus no gas will be supplied to the plant 8 through the line 10, absorption liquid is passed to a stripping tower 15 through a line 14. Carrier gas is supplied to the tower 15, as shown by the arrow 16. The carrier gas may totally comprise air, although a certain amount of water vapour may be charged, so as to simply raise the temperature of the gas if so desired during the stripping process, in order to obtain the desired rate and extent of stripping. The amount of carrier gas supplied is regulated with respect to the gas output desired. The gas carrier, together with the stripped sulphur dioxide, is passed through a line 17 to the sulphuric acid plant 8, where the gas is charged to the contact tower of the plant, the stripping process being caried out so that the same total amount of the gas and the same sulphur dioxide content is supplied to the contact tower of the plant 8 during period 2 as during period 1. Thus, sulphuric acid can be continuously removed from the sulphuric acid plant 8, as indicated by the arrow labelled $H_2SO_4$. The sulphur-dioxide free water from the tower 15 is recycled via a line 18 after being neutralized, for example with lime via line 11, for renewed use as an absorbent in the tower 6.

EXAMPLE

A gas flow of 18000 $m^3$/hr was produced over a smelting period of 100 minutes in a plant of the kind illustrated in the Figure. On average, the gas contained about 20% sulphur dioxide. All of the gas was passed to an absorption tower 6, to which 350 $m^3$/hr water were charged. Gas was removed from the tower at practically the same rate at which gas was introduced thereto, although the output gas contained only 8.7% sulphur dioxide, and the output gas was passed to the sulphuric acid plant 8. During the non-smelting periods, about 18000 $m^3$/hr air were charged to the stripping tower 15 for stripping practically all of the sulphur dioxide contained in the liquid from the tank 13. A gas flow of about 18000 $m^3$/hr containing 8.7% sulphur dioxide was obtained from the tower 15. This corresponds to the amount of gas, together with its sulphur dioxide content, charged to the sulphuric acid plant during the smelting periods.

**Claims**

1. A method of utilizing in the manufacture of sulphuric acid in a contact plant, process gases which contain sulphur dioxide and which originate from discontinuous processes, characterized by withdrawing all of the process gas or a predetermined quantity thereof from being passed to the contact plant during process operational periods in which process gas containing sulphur dioxide is generated, separating sulphur dioxide at least partially from the withdrawn process gas to form a liquid phase containing said separated sulphur dioxide, releasing sulphur dioxide from the liquid phase with the aid of a carrier gas during those process operational periods in which no process gas is generated or passed to the contact plant or the process gas passed to the contact plant contains unsufficiently high quantities or percentages of sulphur dioxide, supplying carrier gas containing the released sulphur dioxide to the contact plant and adjusting the quantity of the carrier gas and the sulphur dioxide content thereof so that, together with any quantities of non-withdrawn process gas and/or withdrawn sulphur dioxide depleted process gas from the separation operation supplied to the contact plant, a predetermined total quantity of gas having a predetermined sulphur dioxide percentage is substantially continuously supplied to the contact plant.

2. A method according to Claim 1, wherein sulphur dioxide is separated from the gas by absorption in a liquid.

3. A method according to Claim 2, wherein the liquid is water, an aqueous solution of pH-buffering salt, or methyl aniline.

4. A method according to Claim 1, wherein sulphur dioxide is separated from the gas by condensing the sulphur dioxide to form a liquid condensate phase.

**Revendications**

1. Procédé d'utilisation, dans la fabrication d'acide sulfurique dans une installation de contact, de gaz de traitement qui contiennent du dioxyde de soufre et qui proviennent de procédés discontinus, caractérisé par le prélèvement de la totalité du gaz de traitement ou d'une quantité prédéterminée de celui-ci en l'empêchant de passer à l'installation de contact durant les périodes opératoires de traitement, au cours desquelles un gaz de traitement contenant du dioxyde de soufre est formé, la séparation au moins partielle du dioxyde de soufre à partir du gaz de traitement prélevé pour former une phase liquid contenant ce dioxyde de soufre séparé, la libération du dioxyde de soufre à partir de la phase liquide formée à l'aide d'un gaz porteur durant les périodes opératoires de traitement au cours desquelles aucun gaz de traitement n'est formé ou envoyé à l'installation de contact ou durant lesquelles le gaz de traitement envoyé à la tour de contact contient des quantités ou des pourcentages insuffisants de dioxyde de soufre, l'alimentation du gaz porteur contenant le dioxyde de soufre libéré à l'installation de contact, et le réglage de la quantité du gaz porteur et de sa teneur en dioxyde de soufre de manière que, avec les quantités quelconques du gaz de traitement non prélevé et/ou du gaz de traitement prélevé et dépourvu de dioxyde de soufre, provenant de l'opération de séparation et alimenté à l'installation de contact, une quantite totale prédéterminé de gaz presentant un pourcentage prédéterminé de dioxyde de soufre soit alimenté de façon pratiquement continue à l'installation de contact.

2. Procédé suivant la revendication 1, caractérisé en ce que le dioxyde de soufre est séparé du gaz par absorption dans un liquide.

3. Procédé suivant la revendication 2, caractérisé en ce que le liquide est de l'eau, une solution aqueuse d'un sel tampon pour le pH, ou de la méthyl aniline.

4. Procédé suivant la revendication 1, caractérisé en ce que le dioxyde de soufre est séparé du gaz par condensation de ce dioxyde de soufre pour former une phase de condensat liquide.

**Patentansprüche**

1. Verfahren zur Verwendung von Verfahrensgasen, die Schwefeldioxid enthalten und die aus nicht kontinuierlichen Verfahren stammen, bei der Herstellung von Schwefelsäure in einer Kontaktanlage, dadurch gekennzeichnet, daß man das gesamte Verfahrensgas oder eine bestimmte Menge desselben von der Überführung zu der Kontaktanlage während der Betriebsperioden, in denen Schwefeldioxid enthaltendes Verfahrensgas erzeugt wird, abzieht, Schwefeldioxid wenigstens teilweise von dem abgezogenen Verfahrensgas unter Bildung einer das abgetrennte Schwefeldioxid enthaltenden flüssigen Phase abtrennt, aus der gebildeten flüssigen Phase mit Hilfe eines Trägergases während jener Betriebsperioden, in denen kein Verfahrensgas erzeugt oder zu der Kontaktanlage geführt wird oder das zu der Kontaktanlage gehende Verfahrengsgas ungenügend große Mengen oder Prozentsätze an Schwefeldioxid enthält, Schwefeldioxid freisetzt, das freigesetztes Schwefeldioxid enthaltende Trägergas zu der Kontaktanlage führt und die Menge des Trägergases und den Schwefeldioxidgehalt desselben derart einstellt, daß zusammen mit Mengen an nicht abgezogenem Verfahrensgas und/oder an Schwefeldioxid verarmtem Verfahrensgas aus dem Trennverfahren, die der Kontaktanlage zugeführt werden, eine vorbestimmte Gasgesamtmenge mit einem vorbestimmten Schwefeldioxidprozentsatz im wesentlichen kontinuierlich zu der Kontaktanlage geführt wird.

2. Verfahren nach Anspruch 1, worin Schwefeldioxid von dem Gas durch Absorption in einer Flüssigkeit abgetrennt wird.

3. Verfahren nach Anspruch 2, worin die Flüssigkeit Wasser, eine wäßrige Lösung eines pH-puffernden Salzes oder Methylanilin ist.

4. Verfahren nach Anspruch 1, worin Schwefeldioxid von dem Gas durch Kondensieren des Schwefeldioxids unter Bildung einer flüssigen Kondensatphase abgetrennt wird.

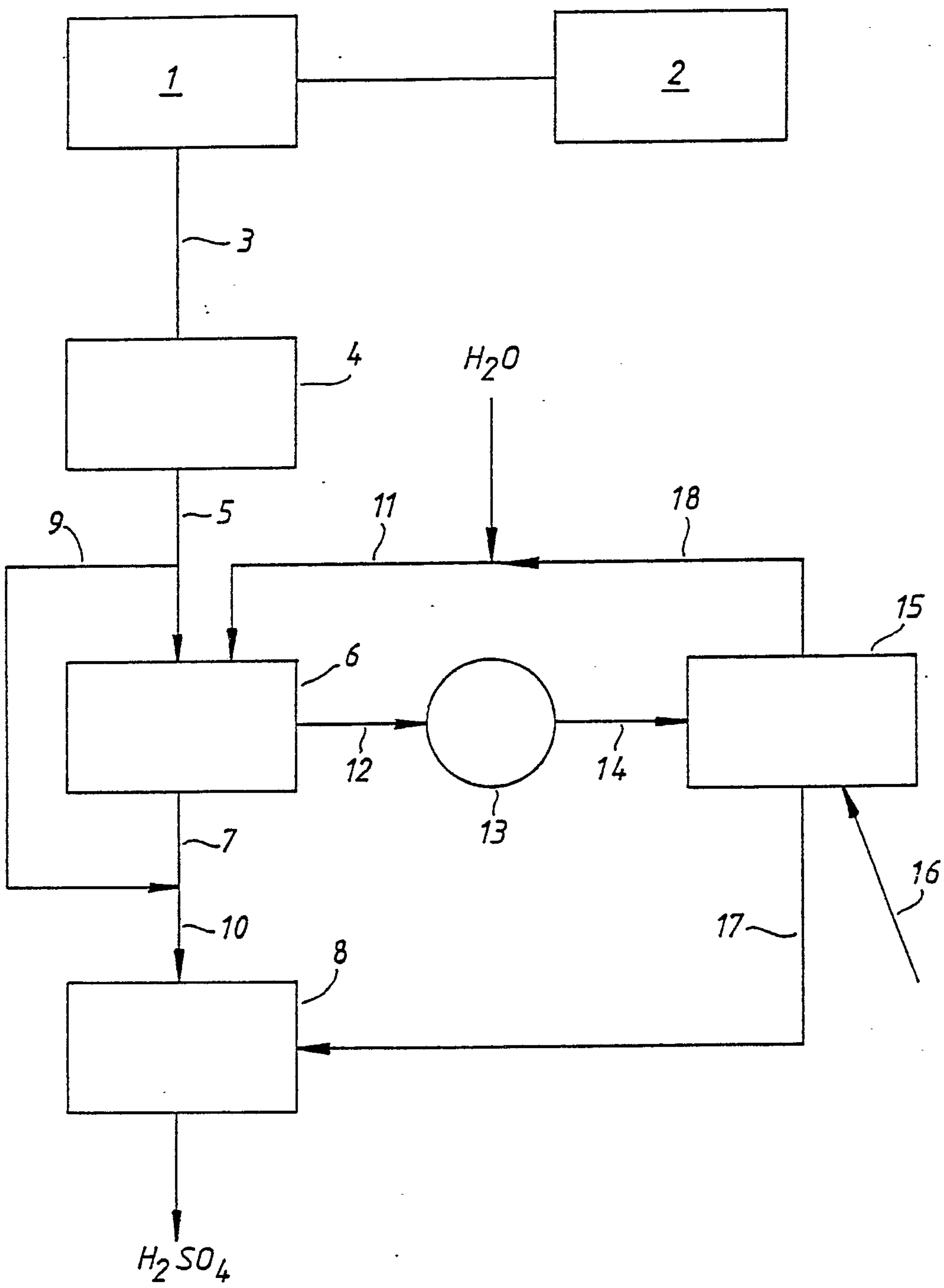
1
2
3
4
$H_2O$
5
9
11
18
15
6
12
13
14
7
16
10
17
8
$H_2SO_4$